# EUROPÄISCHE PATENTSCHRIFT

(11) **EP 1 175 306 B1**
(45) Veröffentlichungstag und Bekanntmachung des Hinweises auf die Patenterteilung: **11.09.2002**
(21) Anmeldenummer: 00925249.5
(22) Anmeldetag: 27.04.2000
(51) Int. Cl.: B60G 17/015, B60G 21/10, B60G 17/04

(54) **AKTUATOR**
ACTUATOR
ACTIONNEUR

(30) Priorität: 03.05.1999 DE 19920109
(43) Veröffentlichungstag der Anmeldung: 30.01.2002
(73) Patentinhaber: ZF FRIEDRICHSHAFEN Aktiengesellschaft, 88038 Friedrichshafen (DE)
(72) Erfinder: GAZYAKAN, Ünal, D-88045 Friedrichshafen (DE); SPECK, Frank-Detlef, D-88045 Friedrichshafen (DE)
(86) Internationale Anmeldenummer: EP0003818
(87) Internationale Veröffentlichungsnummer: WO00066379

(56) Entgegenhaltungen:
- EP-A- 0 383 654
- DE-A- 4 217 458
- GB-A- 2 154 300
- PATENT ABSTRACTS OF JAPAN vol. 1998, no. 10, 31. August 1998 (1998-08-31) & JP 10 129233 A (AISIN SEIKI CO LTD), 19. Mai 1998 (1998-05-19)
- PATENT ABSTRACTS OF JAPAN vol. 011, no. 102 (M-576), 31. März 1987 (1987-03-31) & JP 61 249809 A (KAYABA IND CO LTD), 7. November 1986 (1986-11-07)
- PATENT ABSTRACTS OF JAPAN vol. 010, no. 253 (M-512), 29. August 1986 (1986-08-29) & JP 61 081811 A (KAYABA IND CO LTD), 25. April 1986 (1986-04-25)
- PATENT ABSTRACTS OF JAPAN vol. 012, no. 374 (M-749), 6. Oktober 1988 (1988-10-06) & JP 63 125423 A (ISUZU MOTORS LTD), 28. Mai 1988 (1988-05-28)
- PATENT ABSTRACTS OF JAPAN vol. 016, no. 111 (M-1223), 18. März 1992 (1992-03-18) & JP 03 281415 A (MITSUBISHI MOTORS CORP), 12. Dezember 1991 (1991-12-12)

## Beschreibung

Die Erfindung betrifft einen Aktuator nach der im Oberbegriff von Anspruch 1 näher definierten Art.

Aktive Fahrwerksysteme, die z. B. in Verbindung mit einer hydropneumatischen Federung arbeiten und durch eine oder mehrere Verschiebeeinheiten, sogenannten Aktuatoren, Hydraulikmedium von den hydropneumatischen Federbeinen der einen Fahrzeugseite zu den hydropneumatischen Federbeinen der anderen Fahrzeugseite verschieben, um so den Wankwinkel des Karosserieaufbaus zu beeinflussen, sind aus dem Stand der Technik bekannt.
Eine hydropneumatische Federung ersetzt bei diesen Systemen entweder eine konventionelle Federung des Karosserieaufbaus oder dessen Stabilisatoren.
Ein System, bei dem eine hydropneumatische eine konventionelle Federung des Karosserieaufbaus ersetzt, ist aus der gattungsgemäßen DE 39 36 987 C2 bekannt.
Dieses System zeichnet sich durch ein aktives Entgegenwirken gegenüber Wank- und Nickbewegungen des Fahrzeuges aus, indem unmittelbar zwischen den Abstützorganen verschiedener Fahrzeugseiten bzw. zwischen den vorderen und hinteren Abstützaggregaten Hydraulikmedium aktiv verschoben wird, um eine Fahrzeugseite bei gleichzeitiger Absenkung der anderen Fahrzeugseite anzuheben bzw. das Fahrzeugvorderteil in entsprechender Weise gegenläufig zum Fahrzeugheck zu bewegen.
Dazu wird ein Aktuator in einem Leitungsnetzwerk vorgesehen, das die einzelnen Abstützaggregate eingangs- und ausgangsseitig mit an einer motorisch angetriebenen Pumpe angeordneten Absperrventilen verbindet.
Das aktive Verschieben des Hydraulikmediums im Leitungsnetzwerk kann auch durch zwei oder drei motorisch angetriebene Kolben-Zylinder-Aggregate erfolgen.

Nachteilig wirkt sich bei dem Stand der Technik, wie er in der DE 39 36 987 C2 beschrieben ist, die Tatsache aus, daß es sich hierbei um ein aufwendiges, vielteiliges System handelt, das viel Bauraum benötigt und dennoch zusätzliche passive Federungselemente benötigt, die eine passive Wanksteifigkeit erbringen, gegen die das aktive System arbeiten muß. Außerdem wird die Niveauregelung durch eine separate Pumpen-/Ventilanordnung bewerkstelligt, was einen erhöhten Steueraufwand für das Gesamtsystem bedeutet.

Der vorliegenden Erfindung liegt die Aufgabe zugrunde, einen Aktuator darzustellen, der dieselben Funktionen wie konventionelle Systeme ohne die für eine Niveauregelung zusätzlich benötigten Ventile und Pumpe ausführen kann. Außerdem soll eine einfache Steuerbarkeit des gesamten Aktuators gewährleistet werden. Der erfindungsgemäße Aktuator wird vorzugsweise zum Verschieben eines Druckmediums in einer Vorrichtung zur Federung, Wankstabilisierung und Niveauregulierung von Kraftfahrzeugen verwendet.

Die der Erfindung zugrundeliegende Aufgabe wird durch einen, auch die kennzeichnenden Merkmale des Hauptanspruchs aufweisenden, gattungsgemäßen Aktuator gelöst.

Durch eine definierte Kombination von einer durch einen Elektromotor angetriebenen beidseitig drehenden Pumpe mit mehreren z. B. elektromagnetisch entsperrbaren Rückschlagventilen können die Funktionen Abdichten, Federung, Wankstabilisierung, Niveauregelung und Kneeling mit nur einem Aktuator dargestellt werden. Der für den Antrieb der Pumpe verwendete Elektromotor ist vorzugsweise ein Asynchronmotor der eine vorzugsweise hydraulische Verdrängereinheit antreibt, wodurch ein bestimmtes Volumen an Druckmedium in Abhängigkeit von der Drehrichtung des Elektromotors von einem Zylinder der einen Fahrzeugseite in einen Zylinder der anderen Fahrzeugseite gefördert wird. Asynchronmotoren sind deshalb besonders geeignet, weil sie ein hohes Drehmoment bei kleinen Drehzahlen erzeugen können, kompakte Wechselrichter aufweisen, und deshalb nur einen geringen Platzbedarf benötigen. Als Ventile können Rückschlagventile und 2/2-Wegeventile verwendet werden. Diese beispielsweise elektromagnetisch entsperrbaren Ventile erfüllen in verschiedenen Schaltkombinationen auch verschiedene Funktionen.
Die mit Federzylindern gekoppelten Rückschlagventile bleiben geschlossen, wenn ein rein passives Fahrzeug ohne Wankausgleich dargestellt werden soll.
Dabei müssen die Federzylinder nach der Umgebung hin dicht sein. Für ein Fahrzeug mit aktivem Wankausgleich werden die zwischen den Federzylindern und einer Pumpe liegenden Rückschlagventile geöffnet und die in einer Leitung zum Tank angeordneten Rückschlagventile geschlossen. Die Federzylinder ihrerseits sind über Leitungen, in denen Dämpfungselemente eingebaut sind, mit Speichern verbunden.
Ein Elektromotor treibt die Pumpe je nach Verschieberichtung links- oder rechtsdrehend an. Dabei sind die zwischen Pumpe und Federzylinder liegenden Rückschlagventile geöffnet und die in den zum Tank führenden Leitungen geschlossen.
Für das einseitige Absenken einer Fahrzeugseite, dem sogenannten Kneeling, sind jeweils die zu einer Fahrzeugseite gehörenden Rückschlagventile geschlossen und die der anderen Fahrzeugseite geöffnet. Das Druckmedium aus dem belasteten Federzylinder wird in den Tank zurückgeführt, was zum Absenken der Fahrzeugseite führt. Um das Fahrzeug wieder in eine horizontale Position zu bringen werden die Rückschlagventile paarweise geöffnet bzw. geschlossen, wodurch die Pumpe das Druckmedium in den Tank zurückfördert. Für die Niveauregelung wird ein 2/2-Wegeventil, welches zwischen den Federzylindern und den Rückschlagventilen eingreift, so angesteuert, daß es sich in Durchflußposition befindet. Das von der Pumpe geförderte Volumen an Druckmedium kann vom Tank in die Federspeicher gefördert werden, wodurch sich ein mit den Federspeichern verbundener Karosserieaufbau anhebt. Um den Karosserieaufbau wieder abzusenken, werden alle Rückschlagventile geöffnet, sodaß das Druckmedium wieder in den Tank zurückgeführt werden kann. Die Absicherung des Systems kann durch ein Druckbegrenzungsventil erfolgen, das in Leitungen integriert wird, die die Federzylinder mit der Pumpe verbinden.
In einer kostenoptimierten Variante kann auf das 2/2-Wegeventil verzichtet werden, ohne daß dabei eine der Funktionen nicht mehr dargestellt werden kann. Allerdings kann dann keine gleichmäßige Niveauregelung stattfinden, d. h. der Karosserieaufbau müßte durch ein mehrmalig alternierendes Ausführen der Funktion Kneeling angehoben werden.

Vorteilhafte und zweckmäßige Ausgestaltungen der Erfindung sind in den Unteransprüchen angegeben. Die Erfindung ist aber nicht auf die Merkmalskombinationen der Ansprüche beschränkt, vielmehr ergeben sich für den Fachmann weitere sinnvolle Kombinationsmöglichkeiten von Ansprüchen und einzelnen Anspruchsmerkmalen aus der Aufgabenstellung.

Nachfolgend sind anhand der Zeichnungen Ausführungsbeispiele der vorliegenden Erfindung prinzipgemäß beschrieben.
Es zeigen:
- Fig. 1: ein erstes Ausführungsbeispiel eines erfindungsgemäßen Aktuators und
- Fig. 2: ein kostenoptimiertes Ausführungsbeispiel eines erfindungsgemäßen Aktuators.

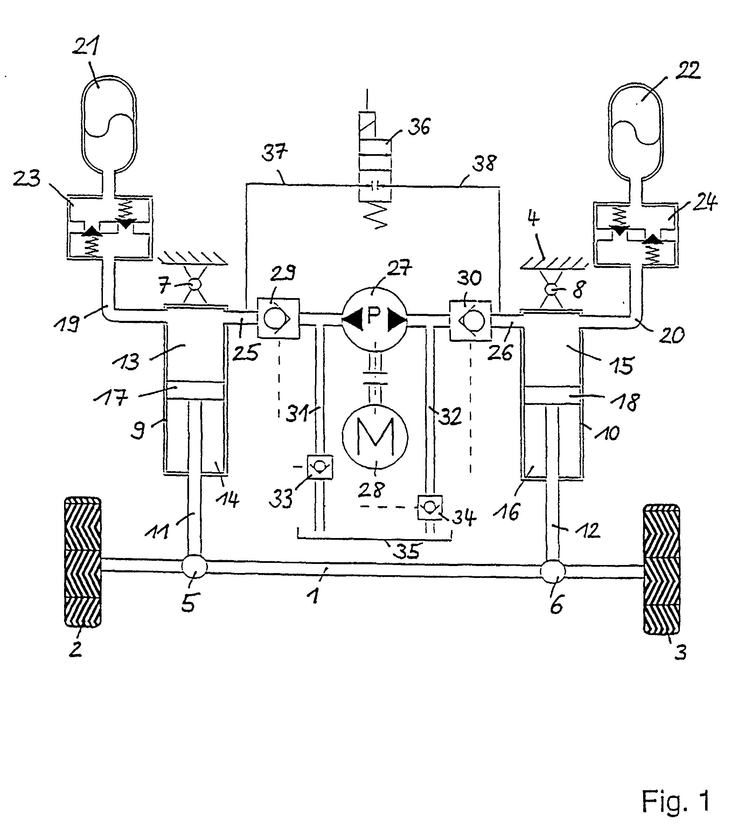

In der Fig. 1 ist als eine vorteilhafte Ausführungsform der Erfindung eine aktive hydropneumatische Federung mit einer Starrachse 1 und daran befestigten Fahrzeugrädern 2 und 3 dargestellt. Anstelle der Fahrzeugräder 2 und 3 kann auch eine Zwillingsbereifung und anstelle der Starrachse 1 jede weitere Radaufhängung vorgesehen werden. Ein erfindungsgemäßer Aktuator kann in jeder beliebigen Ausführungsform eines (aktiven) Fahrwerks verwendet werden. Die Verbindung der Starrachse 1 mit einem Karosserieaufbau 4 erfolgt mittels achsseitiger Gelenke 5, 6 und aufbauseitiger Gelenke 7, 8 über zwei Federzylinder 9 und 10. Der Federzylinder 9 ist mit einer Kolbenstange 11 in dem Gelenk 5 an der Starrachse 1 angelenkt. Analog hierzu greift eine Kolbenstange 12 des Federzylinders 10 in dem Gelenk 6 der Starrachse 1 an. Jeder der Federzylinder 9 und 10 weist jeweils einen oberen Federzylinderraum 13 und 15 sowie einen unteren Federzylinderraum 14 und 16 auf. Die Federzylinderräume 13 und 14 sind durch einen Trennkolben 17, die Federzylinderräume 15 und 16 durch einen Trennkolben 18 voneinander getrennt. Die Federzylinder 9 und 10 sind über Leitungen 19 und 20 mit Speichern 21 und 22 verbunden. In den Leitungen 19 und 20 sind Dämpfungselemente 23 und 24 integriert, die die Funktionalität der Vorrichtung unterstützen. Der Aktuator selbst wird durch die Elemente 25 bis 38 gebildet. Die Federzylinder 9 und 10 sind über Leitungen 25 und 26 mit einer Pumpe verbunden, die durch einen Elektromotor 28 angetrieben wird. Zwischen dem Federzylinder 9 und der Pumpe 27 ist in der Leitung 25 ein Rückschlagventil 29 integriert. Ein weiteres Rückschlagventil 30 sitzt in der Leitung 26 zwischen dem Federzylinder 10 und der Pumpe 27. Zwischen den Rückschlagventilen 29 und 30 und der Pumpe 27 zweigen Leitungen 31 und 32 ab, die jeweils über ein weiteres Rückschlagventil 33 bzw. 34 mit dem Tank 35 verbunden sind.
Ein elektromagnetisch angesteuertes 2/2-Wegeventil ist über Leitungen 37 und 38 mit den Leitungen 25 und 26 verbunden. Um ein rein passives Fahrzeug ohne Wankausgleich darzustellen, werden die Rückschlagventile 29 und 30 geschlossen und somit die Federzylinderräume 13 und 15 gegenüber der Umgebung geschlossen. Für ein aktives Fahrzeug mit Wankausgleich werden die Rückschlagventile 29 und 30 geöffnet und die Rückschlagventile 33 und 34 geschlossen.
Der Elektromotor 28 treibt die Pumpe 27 je nach Verschieberichtung links- oder rechtsdrehend an, wobei die Rückschlagventile 29 und 30 geöffnet, die Rückschlagventile 33 und 34 jedoch geschlossen sind.
Um das Fahrzeug zum Bordstein hin nach rechts abzusenken, werden die Rückschlagventile 29, 33 geschlossen und die Rückschlagventile 30, 34 geöffnet, wodurch das sich in dem Federzylinderraum 15 befindende Druckmedium in den Tank 35 zurückgeführt werden kann. Dadurch neigt sich der Karosserieaufbau 4 auf der rechten Seite nach unten, was ein erleichtertes Einsteigen der Passagiere ermöglicht. Soll nun das Fahrzeug wieder in die Horizontale gebracht werden, werden die Rückschlagventile 29 und 34 geschlossen und die Rückschlagventile 30 und 33 geöffnet. Die Pumpe 27 fördert nun Druckmedium von Tank 35 in den Federzylinderraum 15. Das Fahrzeug stabilisiert sich wieder in der Horizontalen. Für die Niveauregelung wird das 2/2-Wegeventil 36 so angesteuert, daß es sich in Durchflußposition befindet. Die Rückschlagventile 30 und 33 werden bei in Richtung Federzylinder 10 fördernder Pumpe 27 geöffnet und die Rückschlagventile 29 und 34 geschlossen, wodurch Druckmedium aus dem Tank 35 in die Federzylinder 13 und 15 verschoben wird und sich der Karosserieaufbau 4 hebt. Zum Absenken des Karosserieaufbaus 2 werden alle Rückschlagventile geöffnet, das Druckmedium kann in den Tank 35 zurückfließen.

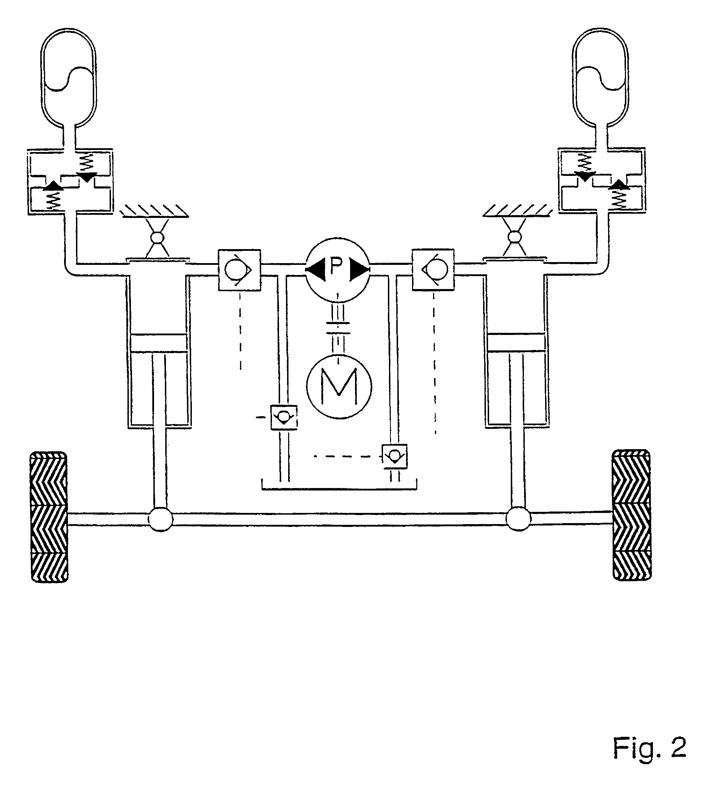

In der Fig. 2 ist eine kostenoptimierte Variante des Aktuators dargestellt, bei der auf das 2/2-Wegeventil verzichtet wird, was die Qualität der Niveauregelung einschränkt. Jedoch können mit dieser Variante der Erfindung ebenfalls alle Funktionen dargestellt werden.

### Bezugszeichen

- 1: Starrachse
- 2: Fahrzeugrad
- 3: Fahrzeugrad
- 4: Karosserieaufbau
- 5: Gelenk
- 6: Gelenk
- 7: Gelenk
- 8: Gelenk
- 9: Federzylinder
- 10: Federzylinder
- 11: Kolbenstange
- 12: Kolbenstange
- 13: Federzylinderraum
- 14: Federzylinderraum
- 15: Federzylinderraum
- 16: Federzylinderraum
- 17: Trennkolben
- 18: Trennkolben
- 19: Leitung
- 20: Leitung
- 21: Speicher
- 22: Speicher
- 23: Dämpfungselement
- 24: Dämpfungselement
- 25: Leitung
- 26: Leitung
- 27: Pumpe
- 28: Elektromotor
- 29: Rückschlagventil
- 30: Rückschlagventil
- 31: Leitung
- 32: Leitung
- 33: Rückschlagventil
- 34: Rückschlagventil
- 35: Tank
- 36: 2/2-Wegeventil
- 37: Leitung
- 38: Leitung

## Patentansprüche

1. Aktuator (25-38) zum Betätigen von Federzylindern an den Rädern eines Fahrzeuges zur Federung, Wankstabilisierung, Niveauregelung und Kneeling des Fahrzeugs, mindestens umfassend folgende Bauteile:
- einen Elektromotor (28),
- eine Pumpe (27),
- Leitungen (25,26,31,32),
wobei
die Pumpe durch den Elektromotor in beiden Drehrichtungen antreibbar ist,
**dadurch gekennzeichnet, daß**
- der Aktuator zusätzlich steuerbare Rückschlagventile (29,30,33,34) umfaßt, und
- die Rückschlagventile in den Leitungen so angeordnet und steuerbar sind, daß die Funktionen Federung, Wankstabilisierung, Niveauregelung und Kneeling durch Betätigen der Federzylinder ohne zusätzliche Aggregate dargestellt werden können.

2. Aktuator nach Anspruch 1, **dadurch gekennzeichnet, daß** die Leitungen (25,26), die von der Pumpe zu den Federzylindern (9,10) führen, über weitere Leitungen (37,38) miteinander verbunden sind.

3. Aktuator nach Anspruch 2, **dadurch gekennzeichnet, daß** in den weiteren Leitungen (37,38) ein 2/2-Wegeventil integriert ist.

4. Verwendung von mindestens einem Aktuator, der nach einem der vorhergehenden Ansprüche ausgebildet ist, in einer aktiven Vorrichtung zur Wankstabilisierung, Federung und Niveauregulierung von Kraftfahrzeugen, bei der jedes Fahrzeugrad (2,3) über ein druckmittelbeaufschlagtes aktives Federungssystem mit einem Karosserieaufbau (4) verbunden ist, welches Federzylinder (9,10) aufweist, die über Leitungen (19,20) mit jeweils einem Speicher (21,22) und einem Dämpfungselement (23,24) verbunden sind.

5. Verwendung von mindestens einem Aktuator nach den Ansprüchen 1 bis 3, **dadurch gekennzeichnet, daß** der Aktuator zwischen den Federzylindern beider Fahrzeugseiten integriert ist.

## Claims

1. Actuator (25-38) for actuating spring cylinders on the wheels of a vehicle for suspension, rolling stabilisation, level control and kneeling of the vehicle, comprising at least the following components:
- an electric motor (28),
- a pump (27),
- lines (25, 26, 31, 32),
wherein
the pump can be driven by the electric motor in both directions of rotation,
**characterised in that**
- the actuator additionally comprises controllable check valves (29, 30, 33, 34) and
- the check valves are arranged and can be controlled in the lines in such a way that the functions of suspension, rolling stabilisation, level control and kneeling can be represented by actuating the spring cylinders without additional units.

2. Actuator according to claim 1, **characterised in that** the lines (25, 26) leading from the pump to the spring cylinders (9, 10) are connected to one another via further lines (37, 38).

3. Actuator according to claim 2, **characterised in that** a 2/2 directional control valve is integrated in the further lines (37, 38).

4. Use of at least one actuator, constructed according to one of the preceding claims, in an active device for rolling stabilisation, suspension and level control of motor vehicles, in which each vehicle wheel (2, 3) is connected via an active suspension system, impacted by pressure means, to a car body structure (4) which has spring cylinders (9, 10), connected via lines (19, 20) to in each case a memory (21, 22) and an attenuation element (23, 24).

5. Use of at least one actuator according to claims 1 to 3, **characterised in that** the actuator is integrated between the spring cylinders of the two sides of the vehicle.

## Revendications

1. Actionneur (25-38) destiné à l'actionnement de cylindres formant ressort qui sont prévus aux roues d'un véhicule pour la suspension élastique, la stabilisation des oscillations, la régulation du niveau et l'agenouillement du véhicule, comprenant au moins les organes suivants :
- un moteur électrique (28),
- une pompe (27),
- des canalisations (25, 26, 31, 32),
dans lequel
la pompe peut être entraînée par le moteur électrique dans les deux sens de rotation,
**caractérisé en ce que**
- l'actionneur comprend en outre des clapets anti-retour (29, 30, 33, 34) pouvant être commandés et
- les clapets anti-retour sont disposés dans les canalisations et peuvent être commandés de telle manière que les fonctions suspension élastique, stabilisation des oscillations, régulation du niveau et agenouillement du véhicule peuvent être réalisées par actionnement des cylindres formant ressort sans organes supplémentaires.

2. Actionneur selon la revendication 1, **caractérisé en ce que** les canalisations (25, 26) qui vont de la pompe aux cylindres formant ressort (9, 10) sont reliées entre elles par d'autres canalisations (37, 38).

3. Actionneur selon la revendication 2, **caractérisé en ce qu'**un distributeur 2/2 est intégré dans les autres canalisations (37, 38).

4. Utilisation d'au moins un actionneur réalisé selon l'une des revendications précédentes dans un dispositif actif pour la stabilisation des oscillations, la suspension élastique et la régulation du niveau de véhicules, dans lequel chaque roue (2, 3) du véhicule est reliée à une superstructure formant carrosserie (4) au moyen d'un système de suspension actif chargé par un milieu de pression qui comprend des cylindres formant ressort (9, 10) qui sont reliés chacun, au moyen de canalisations (19, 20), à un accumulateur (21, 22) et à un élément amortisseur (23, 24).

5. Utilisation d'au moins un actionneur selon les revendications 1 à 3, **caractérisé en ce que** l'actionneur est intégré des deux côtés du véhicule entre les cylindres formant ressort.
